Europäisches Patentamt

European Patent Office

Office européen des brevets

(11) Publication number: **0 259 886 B1**

(12) **EUROPEAN PATENT SPECIFICATION**

(45) Date of publication of patent specification: **24.06.92**

(51) Int. Cl.⁵: **B61D 19/02**, B60J 5/04, B60J 9/02, B64C 1/14, B61D 23/02

(21) Application number: **87113329.4**

(22) Date of filing: **11.09.87**

(54) **Dual-purpose door system.**

(30) Priority: **12.09.86 JP 214045/86**

(43) Date of publication of application:
**16.03.88 Bulletin 88/11**

(45) Publication of the grant of the patent:
**24.06.92 Bulletin 92/26**

(84) Designated Contracting States:
**DE FR GB IT**

(56) References cited:
**AT-B- 374 151**
**FR-A- 2 174 690**
**GB-A- 2 001 598**
**US-A- 4 216 725**

(73) Proprietor: **Kawasaki Jukogyo Kabushiki Kaisha**
**1-1 Higashikawasakicho 3-chome Chuo-ku**
**Kobe-shi Hyogo 650-91(JP)**

(72) Inventor: **Hamamoto, Atsushi**
**13-22, Sumiyoshi Honmachi 1-chome**
**Higashinada-ku**
**Kobe-shi Hyogo 658(JP)**
Inventor: **Ichiki, Mikio**
**618-7, Ohtani Shioya-cho Tarumi-ku**
**Kobe-shi Hyogo 655(JP)**

(74) Representative: **Reinhard, Skuhra, Weise**
**Friedrichstrasse 31**
**W-8000 München 40(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a dual-purpose door system being used for a passenger vehicle and having a door snugly receivable in an aperture of a body of the vehicle and openable in first and second modes for an ordinary and an emergency use.

GB-A-2 001 598 discloses an emergency exit door for vehicles comprising an outer panel and an overlying inner panel hingedly connected along their adjacent upper edges, wherein the outer panel is hingedly connected along its lower transverse edge for outwards by pivotal movement relative to the vehicle body under the control of primary control means. The inner panel is manually unfolded relative to the outer panel under the control of secondary control means to a piston in which the outer and inner panels are contiguous to define an exit ramp, down which passengers can leave the vehicle. The door incorporates a hand rail system, which is erected during unfolding movement of the inner panel. The handrail system may extend both sides of the ramp when erected.

In general terms this pre-known door already comprises a slide unit, a guide unit, a buffer unit and a support unit. However, it is only a one-purpose door system, i.e. for use as an emergency exit, in particular in public service rail vehicles. Therefore, the design of the slide unit and the guide unit does not take into account a second mode of use, i. e. the ordinary use, and, therefore, there is no mode selector unit, which is operatively connected with the guide unit.

It is an object of the present invention to provide a dual-purpose door system for a passenger vehicle, having a door snugly receivable in an aperture of the body of the vehicle and being easily switchable from an ordinary to an emergency mode and vice versa.

According to the invention there is provided a dual-purpose door system for a passenger vehicle having the door snugly receivable in an aperture of the body of the vehicle and being openable in first and second modes, which comprises features a) to e) of claim 1.

Features of advantageous further embodiments are contained in subclaims 2 to 6.

The invention advantageously provides a dual-purpose door system which can be used easily by everyone on both modes of operation. Due to this dual-purpose there is, in difference to GB-A-2 001 598, a design of the slide unit and the guide unit, which is particularly adapted to the dual-purpose same as the provision of the selector unit and its operative connection with the guide unit.

Due to the design of the invention the door system advantageously allows a sufficient openable space both for the ordinary and the emergency mode and the overall dimension of the door system is not restricted by the size of a step board.

Further, contrary to the door system disclosed in GB-A-2 001 598 the dual-purpose door system according to a further embodiment of the invention advantageously provides a winder for restoring the door and the extended extension board in the emergency mode. The first and second support units can be advantageously handled by means of only one buffer unit.

The door system according to the present invention has further the following advantages:

a) It provides a single door system, which can operate in two modes, i.e. the ordinary mode and the emergency mode without restricting the respective functions.

b) The door system can be easily set into the emergency mode by manipulation conducted only from inside of the car body without interfering with the passage of the passengers.

c) In the ordinary mode it is possible to open and close the door from both inside and outside of the body.

d) A slope of the door opened in the emergency mode is not affected by the dimension of the door.

e) The door is kept free from the impulse of the load by the buffer, which would be otherwise caused when the door is opened in the emergency mode thereby achieving an elongated service life of the system.

The features and advantages of the invention will be apparent from the following description of the drawings, wherein a preferred embodiment of the invention is discussed in more detail.

Figure 1 is a side elevational view of a door system in a closed position according to the present invention;

Figure 2 is a side elevational view of the door system in a opened position;

Figure 3 is a plan view of a slider unit with some parts omitted;

Figure 4 is a side elevational view of the slide unit;

Figure 5 is a schematic plan view of a guide unit;

Figure 6 is a side elevational view of the guide unit;

Figure 7 is a diagrammatical view of a lock mechanism;

Figure 8 is a side elevational view of the door system, showing the manner in that a door is opened in an emergency mode;

Figure 9 is a plan view of the door system with the door opened in the emergency mode;

Figure 10 is a rear view of the system with the door closed; and

Figure 11 is a a rear view of the system with the door opened in a ordinary mode.

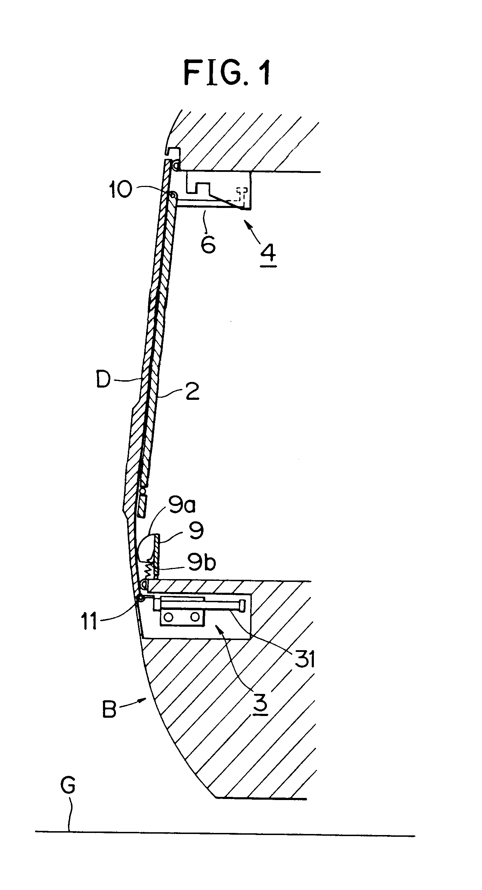

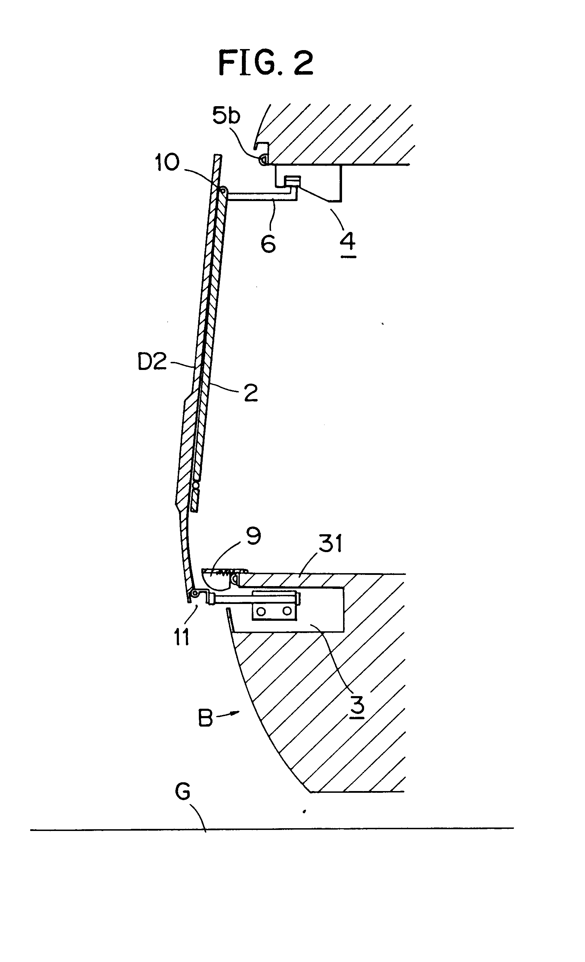

A door system is mounted on a body B of a car. Figures 1 and 2 show the door system according to the present invention, which includes a door 1, a slide unit 3 for supporting the door slidably movably, and a guide unit 4 for guiding the movement of the door.

The door 1 is of a plug-in type and is movable between a closed position of Figure 1 and an opened position of Figure 2 in an ordinary mode. The door has the lower end connected pivotally movably by a hinge 11 to the slide unit 3 disposed in a lower portion of the vehicle body B for the purpose described later on. The door has near the upper end an arm 6 having a roller at its distal end, which arm is guided by the guide unit 4 disposed in an upper portion of the body B.

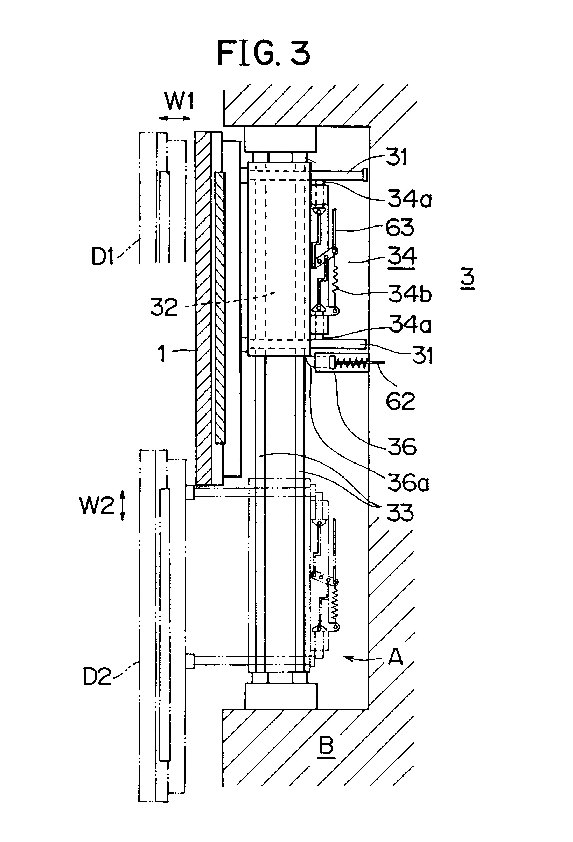

As shown in Figure 3, the slide unit 3 includes a pair of parallel spaced first bars 33,33 secured to the body B at their opposite ends, a slider 32 slidably movable along the first bars, and a pair of parallel spaced second bars 31,31 extending perpendicularly to the second bars and received in the slider 32. The lower end of the door 1 is hinged by the hinges 11 to the outer ends of the second bars 31. With this slide unit 3, the door 1 is carried to move both in an outward/inward direction indicated by an arrow W1 and sideward direction indicated by an arrow W2 in the ordinary mode.

The slide unit 3 also includes a bar stopper 34 for locking the door 1 in its outermost position of the ordinary mode (indicated by a phantom line in Figure 3) and prevents the same from inadvertently returning to an innermost position (indicated by a solid line in Figure 3). The bar stopper 34 has a pair of stops 34a which are movably supported on the slider 32 and normally urged by a spring 34b to engage with the corresponding second bars 31 as shown by a solid line in Figure 3 and lock the same as indicated by a reference numeral A. The stops 34a are disengaged from the first bars by pulling a cord 63 operatively connected via links to the stops 34a.

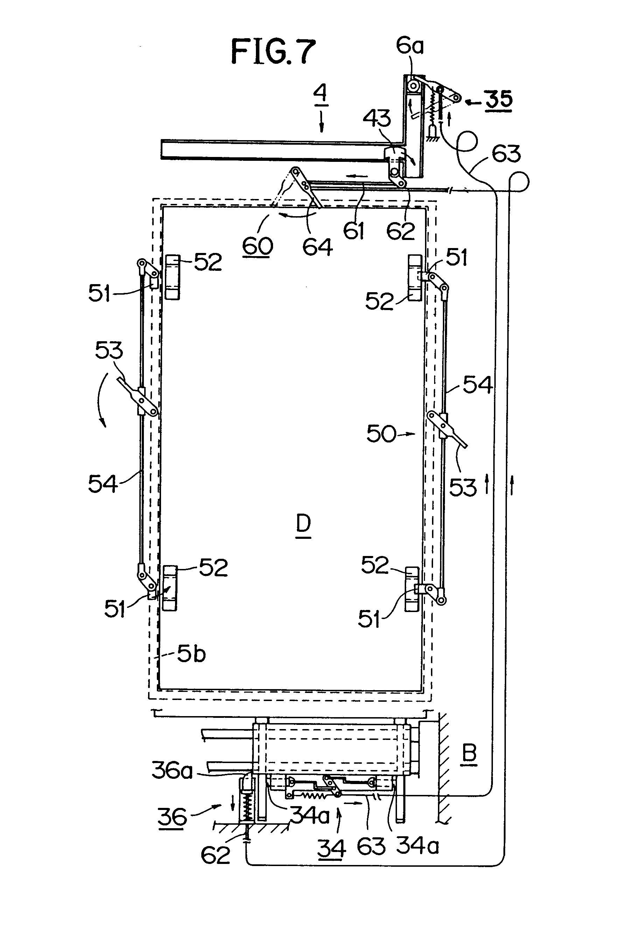

The slide unit 3 also includes a slider stopper 36 disposed on the body B and having a stop 36a operatively connected to an actuating cord 62. The stop 36a is normally urged to project into the path of the slider 32 for blocking the movement of the slider 32, and has an arcuate cam surface ( Figure 7)at its distal end for the purpose described later on.

When the door 1 is unlocked by actuating a door lock mechanism of the system as described later on, the door and hence the second bars 31 slidingly move into the outermost position D1 by its own gravity since the door is kept inclined inwardly about the hinged lower end and thus the center of its gravity is located inwardly of a line vertical (in Figures 1 and 2) to the hinge 11. In case the door is not inclined inwardly in the closed position, a lower portion of the door is manually forced to move outwardly.

Then, with the stop 36a of the slider stopper disposed out of the slider path, the door 1 is moved sidewardly to a position D2 in Figure 3 free from the interference by the body B as the slider 32 slides along the first bars 33.

The number of the first and second bars 33 and 31 is not limited to two.

An inwardly inclined door as described hereinabove is advantageous in that the door does not outwardly fall down prematurely when the door system is switched into the emergency mode.

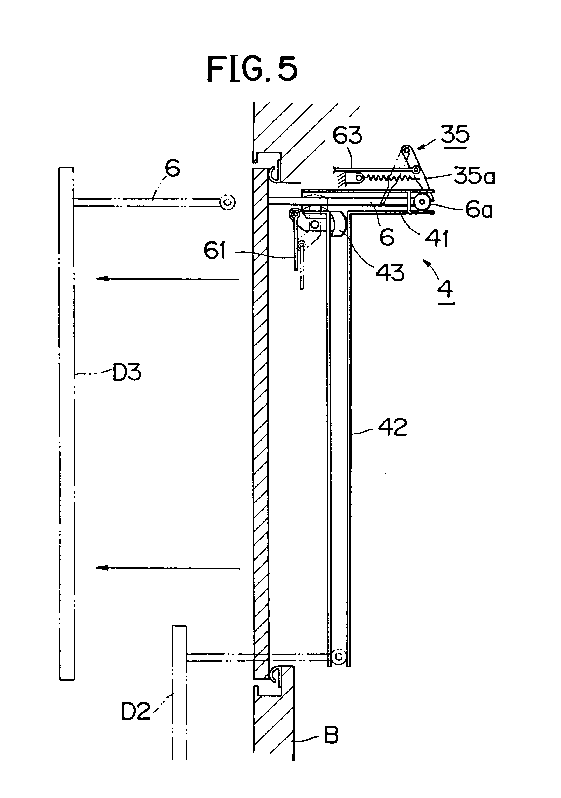

The guide unit 4 is disposed on the body B adjacent to the upper end of the door 1 for guiding the roller 6a of the arm 6 as shown in Figures 5 and 6. The guide unit 4 includes a guide channel 41 extending in the outward/inward direction W1,and a sideward guide channel 42 extending perpendicularly to the guide channel 41 in the direction W2 and communicating with the same. A dividing block 43 (of a selector unit 60 described later on) is disposed in the junction of the two guide channels. The arm roller 6a is received in either of the two channels 41 and 42 by positioning the dividing block 43 selectively in the two channels 42 and 41.

With the dividing block 43 disposed in a position (of the emergency mode) indicated by a solid line in Figure 5, the door 1 can be moved straight outwardly into a free position D3 where the door falls off the body B as the arm roller 6a moves through the guide channel 41 and is disengaged from the same. On the other hand, with the dividing block 43 disposed in a position (of the ordinary mode) indicated by a phantom line in Figure 5, the is moved outwardly and then sidewardly into the opened position D2, as the arm roller 6a is first moved along the guide channel 41 until it is blocked by the dividing block 43, whereupon the the arm roller 6a advances sidewardly into the sideward guide channel 42.

When the lower end of the door 1 is moved outwardly in the unlocked mode of the door system, the upper end of the door 1 can be released from the guide unit 4 to fall open. More specifically, the arm roller 6a is disengaged from a stop plate 44 of the guide unit 4 into the position D2 while the arm 6 takes the position D1, as shown in Figure 6.

The door system also includes a pair of door lock units 50 for selectively locking the door against the movement thereof and the selector unit 60. As shown in Figure 7, the door lock units 50 each includes an actuating lever 53 angularly movably supported on a door frame of the body B, a pair of connecting rods 54 operatively connected at one ends to the lever 53, a pair of stops 51 attached to the other ends of the rods, and a pair of pockets 52 disposed on the door 1 for receiving the respective stops 51 so as to lock the door. The lock unit 50 at the right side in Figure 7 is in a locking mode and the other unit 50 at the left side is in an unlocked mode.

The selector unit 60 serves for switching the operational mode of the door system, i.e. into the ordinary mode or the emergency mode, and includes a selector handle 64 pivotally movably supported on the body B. The selector handle 64 is operatively connected to the dividing block 43 and the slider stopper 36 by connecting cords 61 and 62, respectively. In Figure 7, the handle 64 is disposed in the emergency mode.

To switch into the ordinary mode, the handle 64 is turned to a position indicated by the phantom line so as to move the dividing block 43 into the guide channel 41 and retract the stop 36a of the slider stopper 36 out of the slider travel path.

An unlocking lever 35 is disposed partly in the guide channel 41 and is operatively connected to the bar stopper 34 via a cord 63 as shown in Figures 5 and 7. When the arm 6 on the upper end of the door is inserted from outside into the guide channel 41 and the arm roller 6a is engaged by the lever 35, the stops 34a of the bar stopper 34 is retracted to allow for the inward movement of the second bars 31.

In the first phase, the door system operates as follows:

To open the door 1 in the ordinary mode, the selector handle 64 is set in the ordinary mode , thereby making the the stop 36a of the slider stopper 36 be retracted to unlock the slider 32 and also moving the dividing block 43 angularly into the second guide channel 41 to prevent the roller 6a of the arm 6 from leaving the second guide channel 41. Then the door lock units 50 are unlocked so that the lower portion of the door 1 slides outwardly by its gravity as already described. At this time the upper portion of the door 1 is pushed outwardly until it is stopped by the dividing block 43 and then the door 1 is moved sidewardly to open in the ordinary manner as the arm roller 6a slides long the sideward guide channel 42.

To close the door 1 in the ordinary mode, the reverse procedure is followed. In case the selector handle 64 is inadvertenly in the emergency mode when the door is closed, the slider 32 moves back on the path pushing the stop 36a of the slider stopper 36 aside due to the arcuate cam surface of the stop and besides the arm roller 6a moves back thrusting the dividing block 43 forwardly therewith.

To open the door 1 in the emergency mode, the door lock units 50 are unlocked with the selector handle 64 set in the emergency mode, whereupon the lower portion of the door 1 slides outwardly by the gravity and the the stops 34a of the bar stopper 34 project to prevent the inward movement of the second bars 31. Then the door is manually pushed outwardly with the result that the arm roller 6a is released from the first guide channel 41 and the door falls down outwardly about the hinge 11. At this time, the door system proceeds to move as described hereinbelow.

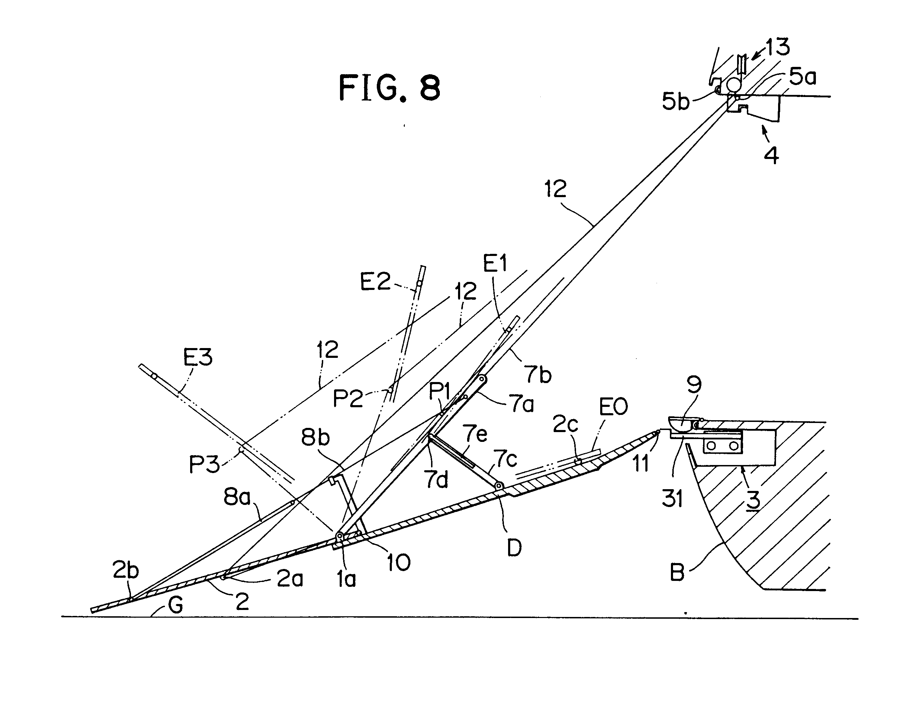

The door system includes a mechanism for making the door fall down outwardly in a smooth and stable manner for a safety escape of the passengers. To this end, the door system includes an extension board 2 extendibly supported on the door, a pair of first support units 7 and and a pair of second support unit 8 both mounted at opposite side edges of the door 1, and a buffer unit 13 disposed on the ceiling of the body B as shown in Figure 8.

Figure 8 shows the manner in which the door system operates.

An extension board 2 is disposed on the rear or back of the door D and pivotally movably connected at the top end thereof to the upper portion of the door by a hinge 10.

The first support units 7 each includes a first rod 7a pivotally movably connected at one end thereof to a pivot 1a disposed adjacent to the top end of the door D, a length of a first supporting cord 7b connecting between the other end of the first rod 7a and a lug 5a fixed on the ceiling of the body B, and an auxiliary bar 7c extending between the an intermediate portion of the door and the first rod 7a. All of the components are normally folded into a linear form parallel to the door D. The auxiliary bar 7c has at one end portion an elongate slot 7e slidably receiving a projection 7d disposed at an intermediate portion of the first rod and is pivotally supported at the other end on an intermediate portion of the door D. When the door D is fully fallen down onto or close to the ground G as shown by a solid line in Figure 8, the first support rod 7a is suspended supportedly by the first supporting cord 7b.

The second support units 8 each includes a second bar 8a pivotally connected at one end to a pin 2b secured to one side edge of the door adjacent to the top end thereof, and a length of a second connecting cord 8b extending from the other end to the first bar 7a.

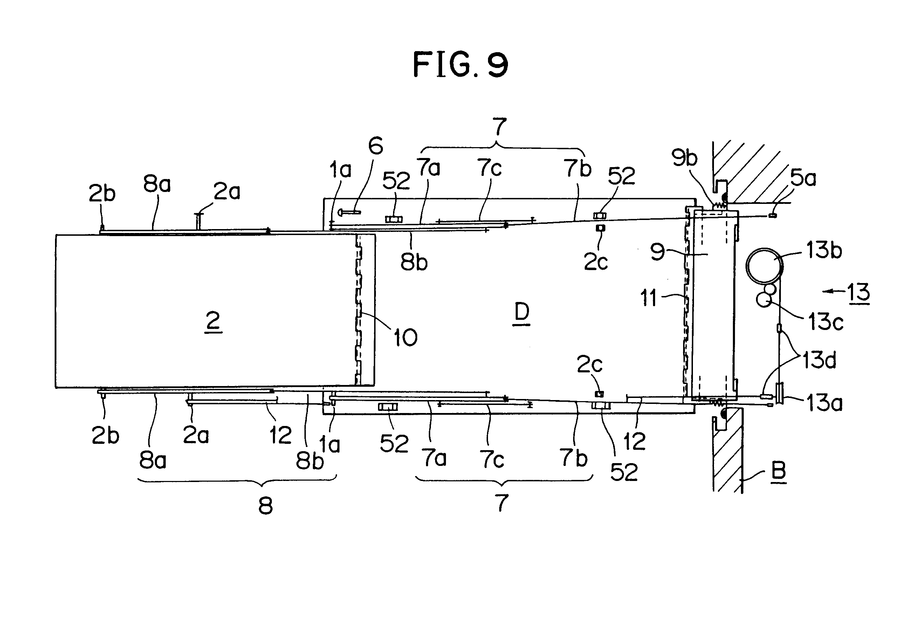

The buffer unit 13, as best shown in Figure 9, includes a buffer 13a for controlling the feeding rate of a buffer cord 12, a drum 13b on which the cord 12 is wound, a winder 13c for driving the drum to rotate for wind the cord 12, and pulleys 13d for guiding the cord 12. The buffer is preferably a known brake means for frictionally engaging the cord 12 to control the feed of the buffer cord 12 at a predetermined rate, and operates only when the cord 12 is fed. The buffer cord 12 is connected to the pivot 1a at the top end of the door 1.

In the second phase, the door system operates as follows:

As shown in Figure 8, subsequent to the first phase, the door 1 pivotally moves about the hinge 11 to fall down forwardly into a suspended position where the door is suspended by the first supporting cord 7b via the first rod 7a. During this operation, the door falls down slowly since it is also suspended by the buffer cord 12 being fed at the controlled rate by the buffer unit 13. This arrangement prevents an objectionably fast movement and/or a bounce of the door dangerous to the passengers.

At this time, the extension board 2 is pivotally moved from a position E0 where it is locked by a pair of clampers 2c receiving the pins 2b to a position E1 where the board E is raised by the first rods 7a engaging with the pins 2a. The extension board 2 is further moved into positions E2,E3 successively, whereupon the pin 2a engages the buffer cord 12 so as to make the board 2 move at the controlled rate. The board finally moves into a position indicated by a solid line where it is landed onto the ground or suspended slightly away from the ground by the second support unit 8.

With this arrangement, the door D and extension board 2 are supported in a stable manner at the final position of the solid line. In this embodiment, the first and second support units are provided in pairs at the opposite sides, respectively. However, the two units 7 and 8 may be provided at only one side of the door, if the door and board are rigid enough to stand the load i.e. the weight of the passengers.

To restore the thus extended door system by housing the door and the extended extension board 2, the winder 13c is actuated to wind the buffer cord 12 around the drum 13b, whereupon the pin 2a of the board is first pulled upwardly thereby moving the board back to the position E1. With the continued winding of the cord 12, the door D starts to be raised and finally forced to be plugged or received snugly into the opening of the body B. During this operation, the first rods 7a and the auxiliary bars 7c are folded and the pins 2a are forced against the door D. At this time, the board 2 is secured to the door D by locking the pins 2b into the clampers 2c. For the emergency use, the clampers 2c may release the pins 2c when a relatively strong force is externally applied thereto.

When the door D is restored into the opening of the body, the arm roller 6a of the arm 6 at the top of the door is allowed to move back in and along the first guide channel 41 into the position D1 indicated by a phantom line in Figure 6, during which time the dividing block 43 is disposed in the position indicated by the solid line in Figure 5. During this movement of the arm roller 6a, the roller pushes the lever 35a of the unlocking unit 35 for pulling the cord 63 connected to the bar stopper 34 as shown in Figure 7, thus making the stops 34a retract into the unlocked position. Then the lower end portion of the door is moved back inwardly by pulling a suitable grip on the door to make the second bars 31 slide through the slider 32 so that the door is returned into the closed position where the door is fit substantially into the opening of the body B as indicated by the solid line in Figure 6. To complete the closing of the door the lock units 50 are locked.

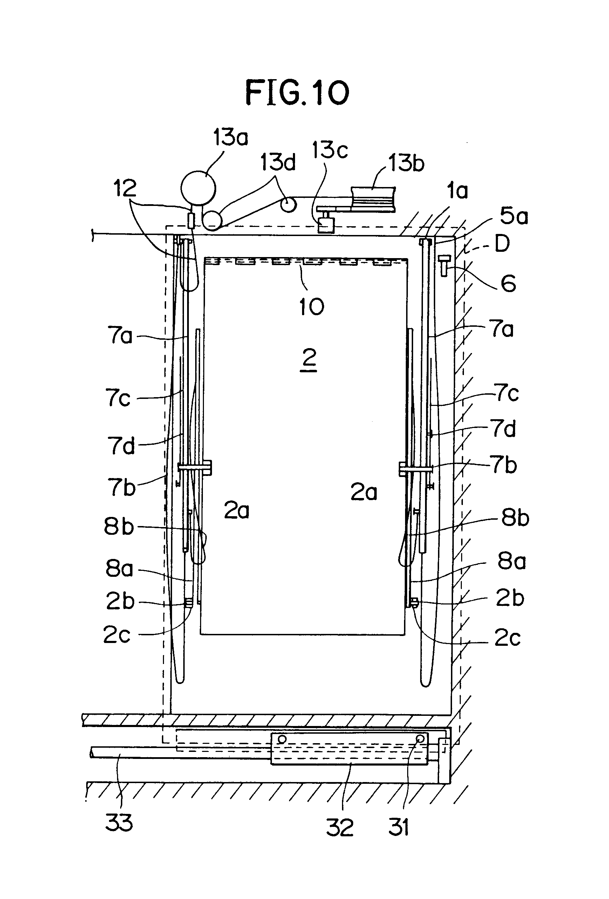

Figure 10 shows the door D in its rear view, in which the first and second support rods 7a and 8a are held against the door by the pins 2a and folded, while the supporting cords 7b, 8b and the buffer cord 12 are hanging down loosely. The buffer cord 12 has a hanging portion long enough allow for the door D slides at the initial stage.

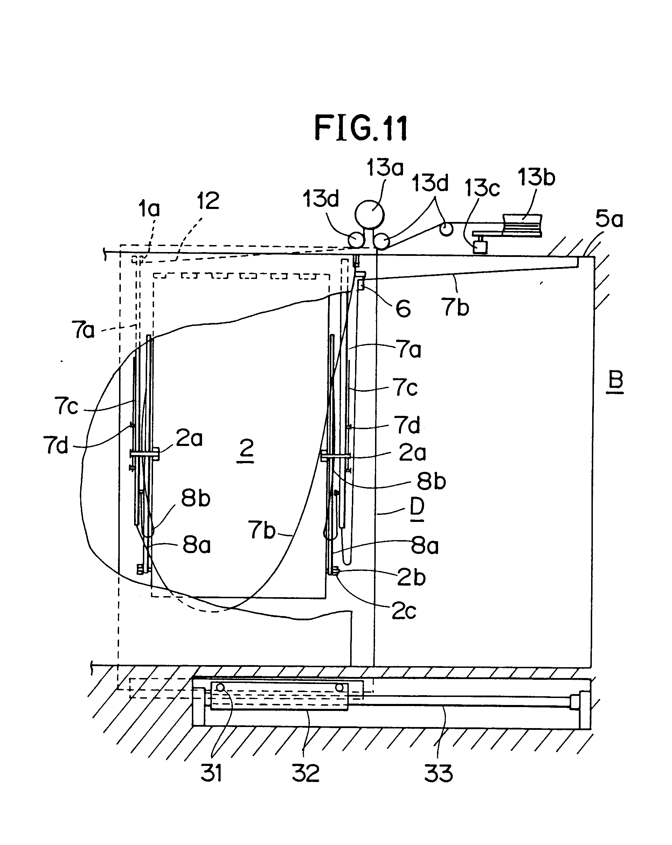

Figure 11 shows the door in its rear view, in which the door is opened in the ordinary mode. The supporting cord 7b at the right side of the door is suitably guided by the arm 6 of the door so as not to hang into the open space for the passage of the passengers. The buffer cord 12 has a predetermined length of its portion hung so as not to interfere with the operation of the door. The first supporting cord 7b at the left side of the door is hung in a space between the door D and the body B.

It is possible that all the units except for the slide unit 3 of the door system of the invention are provided inside the body B and that the door is opened from the outside of the body B in the ordinary mode if the lock unit 50 is disposed on the outside of the door D.

In this embodiment, the bar stopper 34 is carried by the slider 32 and moved together therewith, when opened in the ordinary mode, for keeping the door D from getting into contact with the body B. However, the bar stopper 34 do not have to be moved with the slide unit, if the center of the gravity of the combined body of the door and the extension board lies sufficiently inwardly of the vertical axis of the hinge 11 at the lower end of the door.

As an auxiliary component, there is provided a step board 9 pivotally connected to the floor of the body B and normally urged by a tension spring 6b into a ordinary position as shown in Figures 1,2,8 and 9. The step board 9 operates irrespective of the operation mode of the door system. The step board 9 has a projection 9a having an arcuate cross section serving as a cam surface, with which the door engages for making the same spring up when the door is closed. The step board 9 serves for bridging over or narrowing a gap between the floor of the body B and the fallen door D. To this end, the step board 9 may have suitable shape and size.

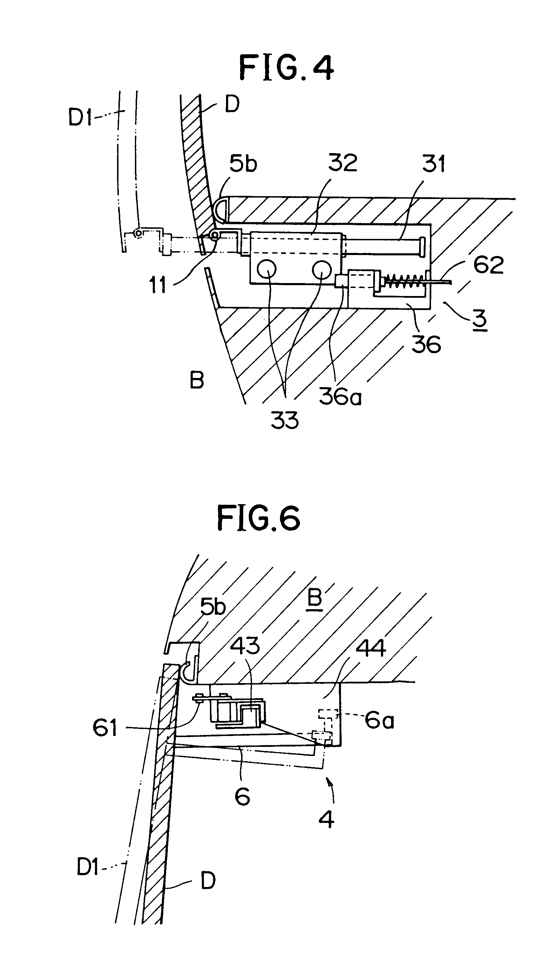

There is also provided a plurality of seal elements 5b at suitable locations of the body B for sealing the door to be plugged in the opening of the body B, as shown in Figures 2,4,6,7 and 8.

## Claims

1. A dual-purpose door system being used for a passenger vehicle and having a door (1, D) snugly receivable in an aperture of a body (B) of the vehicle and openable in first and second modes, comprising:

   a) a slide unit (3) disposed in the body (B) adjacent to a bottom end of the aperture and having a hinge means (11) connected to a lower end of the door (1, D) for pivotally movably supporting the door (1, D) such that said door being movable in an outward/inward direction and a sideward direction;

   b) a guide unit (4) disposed on the body adjacent to a top end of the aperture of the body (B) for detachably receiving and guiding the door (1, D);

   c) a selector unit (60) separately from door lock units (50) for switching the operational mode of the door system, comprising a selector handle (64) movably supported on the body (B) and operatively connected to a dividing block (43) for switching the movement of the door (1, D) guided by and along the guide unit (4), and operatively connected with a slider stopper (36) for the slide unit (3) disposed on the car body (B) for switching the operative direction of said slide unit (3);

   d) a buffer unit (13) disposed on the body (B) and having a buffer cord (12) operatively connected to the door (1, D), said buffer unit (13) being adapted to feed the cord (12) at a controlled rate so as to regulate a speed at which the door (1, D) opens in the second mode; and

   e) at least one support unit (7, 8) each having a support cord (7b, 8b) and foldable rods (7a, 7b) and connecting to each other and also operatively connecting the door (1, D) to the body (B).

2. A door system according to claim 1, wherein said dividing block (43) is operatively connected to said selector unit (60) via a cord (61).

3. A door system according to claim 1 or 2, wherein said guide unit (4) includes a first guide channel (42) for guiding a top end portion of the door (1, D) in the sideward direction and a second guide channel (41) communicating with said first guide channel (42) at a merging point for guiding the same in the outward/inward direction, said guide unit (4) including said dividing block (43) disposed at that merging point and selectively movable between a first position defined in said second channel (41) at a second position defined in said first channel (42).

4. A door system according to a preceding claim, wherein said slide unit (3) includes a slider (32) slidably movable in an outward/inward direction (W1) and in a sideward direction (W2), said slider stopper (36) having an arcuate cam surface (36a) at its distal end for blocking one sideward movement of the slider (32) and allowing for the opposite sideward movement of the same.

5. A door system according to a preceding claim, wherein said buffer unit (13) includes a drum (13b) having said buffer cord (12) wound thereon, a brake means for frictionally restricting the feeding rate of the buffer cord (12) from the drum (13b), and a winder (13c) driven to wind the buffer cord (12) around said drum.

6. A door system according to a preceding claim, wherein a step-board means (9) is mounted upon the supporting wall for automatically spanning a gap between the supporting wall and the door (1, D) when the door (1, D) is disposed in the open position.

## Revendications

1. Système de porte à double usage, utilisé dans un véhicule de transport de passagers et comportant une porte (1, D) agencée de façon à pouvoir s'escamoter dans une baie de la carrosserie (a) du véhicule et agencée de façon à pouvoir s'ouvrir dans un premier et dans un deuxième modes, ce système comprenant :

   a) une unité de coulissement (3) disposée dans la carrosserie (B) au voisinage du bord inférieur de la baie et comportant un moyen d'articulation à charnière (11) relié au bord inférieur de la porte (1, D) de façon à soutenir cette dernière pour qu'elle puisse se déplacer en pivotement, d'une manière telle que ladite porte puisse se déplacer vers l'extérieur ou vers l'intérieur et en direction latérale ;

b) une unité de guidage (4) disposée sur la carrosserie (B) à proximité du bord supérieur de la baie de cette carrosserie (B) de façon à recevoir la porte (1, D) d'une manière amovible et à la guider ;

c) une unité de sélection (60) indépendante d'unités de verrouillage de porte (50) et permettant de changer le mode de fonctionnement du système de porte, cette unité de sélection comprenant une poignée de sélection (64) qui est montée de manière mobile sur la carrosserie (B) et reliée fonctionnellement à un bloc séparateur (43) permettant de changer le mouvement de la porte (1, D) guidée par l'unité de guidage (4) et le long de cette dernière et qui est aussi reliée fonctionnellement à un dispositif d'arrêt de coulisseau (36) associé à l'unité de coulissement (3) disposée sur la carrosserie (a) du véhicule en vue de changer le sens de fonctionnement de cette unité de coulissement (3) ;

d) une unité d'amortissement (13) disposée sur la carrosserie (B) et comportant un câble d'amortissement (12) relié fonctionnellement à la porte (1, D), cette unité d'amortissement (13) étant agencée de façon à fournir le câble (12) à une vitesse contrôlée de manière à régler la vitesse à laquelle la porte (1, D) s'ouvre dans le deuxième mode ; et

(e) au moins une unité de support (7, 8), chaque unité de support comprenant un câble de support (7b, 8b) et des tiges pliables (7a, 7c) qui sont réunis entre eux et relient aussi fonctionnellement la porte (1, D) à la carrosserie (B).

2. Système de porte suivant la revendication 1, dans lequel le bloc de séparation (43) est relié fonctionnellement à l'unité de sélection (60) par un câble (61).

3. Système de porte suivant la revendication 1 ou 2, dans lequel l'unité de guidage (4) comprend un premier couloir de guidage (42) permettant de guider une extrémité supérieure de la porte (1, D) en direction latérale et un deuxième couloir de guidage (41) communiquant avec le premier couloir de guidage (42) en un point de raccordement en vue de guider ladite extrémité vers l'extérieur ou vers l'intérieur, cette unité de guidage (4) comprenant ledit bloc de séparation (43) disposé au point de raccordement et agencé de façon à pouvoir être déplacé d'une manière sélective entre une première position définie dans laquelle il se trouve dans le deuxième couloir (41) et une deuxième position définie dans laquelle il se trouve dans le premier couloir (42).

4. Système de porte suivant l'une quelconque des revendications précédentes, dans lequel l'unité de coulissement (3) comprend un coulisseau (32) agencé de façon à pouvoir se déplacer en coulissement vers l'extérieur ou vers l'intérieur (W1) et en direction latérale (W2), le dispositif d'arrêt de coulisseau (36) comportant une surface de came incurvée (36a) à son extrémité distale en vue d'empêcher un déplacement du coulisseau (32) dans un sens en direction latérale et à permettre son déplacement dans le sens opposé.

5. Système de porte suivant l'une quelconque des revendications précédentes, dans lequel l'unité d'amortissement (13) comprend un tambour (13b) sur lequel le câble d'amortissement (12) est enroulé, un moyen de freinage, permettant de limiter par frottement la vitesse de fourniture du câble d'amortissement (12) à partir du tambour (13b), et un enrouleur (13c) entraîné de façon à enrouler le câble d'amortissement (12) autour du tambour.

6. Système de porte suivant l'une quelconque des revendications précédentes, dans lequel un marche-pied (9) est monté sur la paroi de support de façon à boucher automatiquement l'intervalle entre la paroi de support et la porte (1, D) lorsque cette porte (1, D) est en position d'ouverture.

**Patentansprüche**

1. Doppelzweck-Türsystem zur Verwendung bei einem Passagierfahrzeug und mit einer Tür (1, D), die in einer Öffnung einer Karosserie (B) des Fahrzeugs geschützt aufnehmbar ist und in eine erste und in eine zweite Stellung zu öffnen ist, bestehend aus

(a) einer Gleiteinheit (3), die in der Karosserie (B) nahe zu einem anderen Ende der Öffnung angeordnet ist und eine Scharnieranordnung (11) besitzt, die mit einem unteren Ende der Tür (1D) für das schwingend bewegte Halten der Tür (1, D) derart verbunden ist, daß die Tür in einer Auswärts/Einwärtsrichtung und in einer Seitwärtsrichtung bewegbar ist;

(b) eine Führungseinheit (4), die auf der Karosserie nahe einem oberen Ende der Öffnung der Karosserie (B) zur lösbaren Aufnahme und Führung der Tür (1, D) angeordnet ist;

(c) eine Wähleinheit (60), die separat von Türverriegelungseinheiten (50) zum Schalten der Betriebsart des Türsystems angeordnet ist, bestehend aus einem Wählhebel (64), der bewegbar an der Karosserie (B) gelagert und funktionell mit einem Teilungsblock (43) für das Schalten der Bewegung der Tür (1, D) verbunden ist, welche durch die und längs der Führungseinheit (4) geführt ist, und der funktionell mit einem Gleitanschlag (36) für die Gleiteinheit (3) verbunden ist, der an der Fahrzeugkarosserie (B) zum Schalten der Betriebsrichtung der Gleiteinheit (3) angeordnet ist;

(d) eine Puffereinheit (13), die an der Karosserie (B) angeordnet ist und ein Pufferseil (12) besitzt, daß funktionell mit der Tür (1, D) verbunden ist, wobei durch die Puffereinheit (13) das Seil (12) mit einer kontrollierten Rate zum Regulieren einer Geschwindigkeit zuführbar ist, mit der die Tür (1, D) in der zweiten Betriebsart sich öffnet; und

(e) wenigstens eine Lageeinheit (7, 8), von denen jede ein Halteseil (7b, 8b) und faltbare Stangen (7a, 7d) besitzt und die jeweils miteinander verbunden sind und auch funktionell die Tür (1, D) mit der Karosserie (B) verbinden.

2. Türsystem nach Anspruch 1, bei dem der Teilungsblock (43) funktionell über ein Seil (61) mit der Wähleinheit (60) verbunden ist.

3. Türsystem nach Anspruch 1 oder 2, bei dem zu der Führungseinheit (4) ein erster Führungskanal (42) zum Führen eines oberen Endabschnitts der Tür (1, D) in seitlicher Richtung und ein zweiter Führungskanal (41) gehören, welcher mit dem ersten Führungskanal (42) an einer Auftreffstelle zur Führung derselben in der Auswärts/Einwärtsrichtung in Verbindung steht, wobei die Führungseinheit (4), welche den Teilungsblock (43) aufweist, an der Auftreffstelle angeordnet ist und wahlweise zwischen einer ersten in dem zweiten Kanal (41) definierten Stellung und einer zweiten in dem ersten Kanal (42) definierten Stellung bewegbar ist.

4. Türsystem nach einem vorangehenden Anspruch, bei dem zu der Gleiteinheit (3) ein Gleitelement (32) gehört, das in Auswärts/Einwärtsrichtung (W1) und in einer Seitwärtsrichtung (W2) gleitend verschiebbar ist, wobei der Gleitanschlag (36) eine gekrümmte Steuerfläche (36a) an seinem distalen Ende zum Blockieren einer Seitwärtsbewegung des Gleitelements (33) und zur Ermöglichung der entgegengesetzten Seitwärtsbewegung desselben aufweist.

5. Türsystem nach einem vorangehenden Anspruch, bei dem zu der Puffereinheit (13) eine Trommel (13b), auf der das Pufferseil (12) gewickelt ist, eine Bremseinrichtung zum reibungsmäßigen Begrenzen der Zuführgeschwindigkeit des Pufferseils (12) von der Trommel (13b) und eine Wendeeinrichtung (13c) gehören, welche zum Aufwickeln des Pufferseils um die Trommel angetrieben ist.

6. Türsystem nach einem vorangehenden Anspruch, bei dem die Trittbrettanordnung (9) auf der Haltewand für das automatischen Überbrücken eines Spaltes zwischen der Haltewand und der Tür (1, D) bei sich in der geöffneten Stellung befindlicher Tür (1, D) montiert ist.

# FIG. 1

# FIG. 2

# FIG. 3

# FIG.4

# FIG.6

# FIG.5

FIG.7

# FIG. 8

EP 0 259 886 B1

# FIG.9

EP 0 259 886 B1

FIG.10

# FIG.11